# EUROPÄISCHE PATENTANMELDUNG

(11) **EP 0 555 849 A2**
(43) Veröffentlichungstag der Anmeldung: **18.08.1993**
(21) Anmeldenummer: 93102154.7
(22) Anmeldetag: 11.02.1993
(51) Int. Cl.: C09C 3/06, C04B 33/14, C03C 4/02, C09C 1/00, C09C 1/40, C09C 1/30, C04B 35/10, C04B 35/62

(54) **Mit keramischen Farbkörpern ummantelte Hartstoffpartikel auf Oxidbasis, Verfahren zu ihrer Herstellung und ihre Verwendung**

(30) Priorität: 13.02.1992 CH 431/92
(71) Anmelder: H.C. Starck GmbH & Co. KG, D-38642 Goslar (DE)
(72) Erfinder: Strittmatter, Rudolf, Waldshut (DE); Kunz, Reiner, Dr., Waldshut (DE); Kerber, Albert, Dr., W-7883 Görwihl (DE); Vierus, Bernhard, Lauchringen (DE)
(74) Vertreter: Steiling, Lothar, Dr.

(57) **Zusammenfassung**

Die vorliegende Erfindung betrifft Hartstoffpartikel auf Oxidbasis, insbesondere aus Korund, welche mit keramischen Farbkörpern ummantelt sind, sowie ein Verfahren zu ihrer Herstellung.
Die erfindungsgemässen Hartstoffpartikel eignen sich insbesondere als farbgebender, verschleissmindernder und/oder rutschhemmender Zusatz für keramische Glasuren, beispielsweise für keramische Bodenfliesen.

## Beschreibung

Die vorliegende Erfindung betrifft Hartstoffpartikel auf Oxidbasis, insbesondere aus Korund, welche mit keramischen Farbkörpern ummantelt sind, sowie ein Verfahren zu ihrer Herstellung. Sie betrifft weiterhin die Verwendung dieser Partikel als farbgebende, verschleisshemmende und aufrauhende Komponente, insbesondere in keramischen Glasuren, Emails, Anstrichstoffen und Beschichtungsmassen.

Zur Verbesserung der mechanischen Eigenschaften, insbesondere der Verschleissfestigkeit und der Rutschsicherheit, werden in hochbelastete Oberflächen häufig Hartstoffpartikel eingearbeitet. Beispiele für solche Oberflächen sind unter anderem keramische Fussbodenfliesen bzw. deren Glasuren, insbesondere für Bodenflächen in Nassräumen, wie öffentlichen oder privaten Bädern, oder im Freien, oder Bodenbeläge aus anderen Materialien wie Kunststoffen oder Kunststein, die ähnlichen Belastungen ausgesetzt sind. Als Hartstoffpartikel werden zu diesem Zweck vor allem Korundkörnungen eingesetzt, die sich im Gegensatz zu nichtoxidischen Hartstoffen wie Hartmetallen oder Siliciumcarbid ohne störende chemische Reaktionen in Glasuren und Emails einarbeiten lassen und bei günstigen Preisen eine befriedigende Härte und Verschleissfestigkeit aufweisen.

Ein Nachteil der handelsüblichen Korundkörnungen liegt darin begründet, dass nur begrenzte Farbgebungen und Oberflächenerscheinungsbilder möglich sind, was insbesondere im Wohnbereich und in öffentlichen Bauten zu starken Einschränkungen führt. Der Grund hierfür liegt in den Eigenfarben dieser Korundkörnungen, die weiss bis braun oder grau bis blau bzw. bei speziellen Korunden auch rosa bis rubin sind und sich zudem beim Einsatz in keramischen Glasuren während des Brennvorgangs verändern können. Befriedigende Resultate werden daher nur erreicht, wenn die Glasur ungefähr die gleiche Farbe aufweist, womit die Farbpalette sehr eingeengt wird und auch alle intensiven Farbtöne ausgeschlossen sind. Eine Erhöhung der Farbkörpermenge in der Glasur über den üblichen Wert hinaus bringt dabei keine Abhilfe, weil die Korundpartikel ihrem Zweck entsprechend an der Oberfläche der Glasur liegen müssen, und führt ausserdem zu einer wesentlichen Verteuerung. Eventuell gewünschte Oberflächenerscheinungsbilder, wie z.B. Sprenkelungen mit unterschiedlichen Farben zwischen Glasur und Hartstoff, sind ebenfalls nur stark begrenzt möglich.

Aufgabe der vorliegenden Erfindung war daher, oxidische Hartstoffpartikel zur Verfügung zu stellen, welche in beliebig gefärbte Glasuren und andere Oberflächen eingearbeitet werden können, ohne den Farbeindruck zu beeinträchtigen und die eine Erweiterung der Farbpalette zur Erzeugung von homogenen Einfärbungen und speziellen Oberflächenerscheinungsbildern wie z.B. Sprenkelungen, Mattierungen, Melierungen, Marmorierungen und anderen Musterungen zulassen.

Erfindungsgemäss wird diese Aufgabe durch die mit keramischen Farbkörpern ummantelten Hartstoffpartikel nach Patentanspruch 1 gelöst.

Es wurde gefunden, dass es möglich ist, Hartstoffpartikel auf Oxidbasis mit einer Ummantelung aus einem oder mehreren keramischen Farbkörpern und einem Bindemittel zu versehen.

Auf diese Weise können die guten mechanischen Eigenschaften der Hartstoffpartikel genutzt werden, ohne dadurch Einschränkungen in der Farbgebung oder eine Beeinträchtigung in der Anzahl möglicher Erscheinungsbilder derjenigen Gegenstände, in welchen die Partikel zu Anwendung kommen, hinnehmen zu müssen.

Unter keramischen Farbkörpern sind hier aus (anorganischen) Oxiden über einen Glühprozess hergestellte, anorganische Verbindungen (z. B. Rutile, Spinelle, Chromite, Aluminate, Ferrite usw.) zu verstehen, die als färbender Bestandteil in keramischen Glasuren verwendet werden und sich dadurch auszeichnen, dass sie sich in keramischen Glasuren nicht oder nur wenig lösen.
Daneben ist je nach anwendungsspezifischen Erfordernissen der Einsatz von anorganischen Pigmenten, wie z. B. Einphasen- oder Mehrphasenmetalloxiden, Metallpulvern usw., sowie von Farbfritten möglich.

Eine Übersicht gibt z.B. B. Römpp, Chemie-Lexikon, 9. Auflage, Band 4, 1991, G. Thieme Verlag Stuttgart, oder W. Heinz, Silicat-Lexikon, 1. Auflage 1985, Akademie-Verlag Berlin, S. 226.

Generell gilt, dass für Oberflächen, die keinen Temperaturen oberhalb von ca. 300°C ausgesetzt sind, wie z.B. Anstrichfarben, Kunststoffoberflächen und Beton, alle keramischen Farbkörper nach obiger Definition problemlos verwendbar sind.
Bei der Verwendung von Farbgläsern speziell in Glasuren von Fliesen findet eine Schmelzvermischung der Farbgläser mit der Glasur um den Hartstoffkern herum statt, was zu einem zum Teil gewünschten Melierungseffekt führen kann.
Bei Verwendung von anorganischen Pigmenten in Glasuren muss im Einzelfall geprüft werden, inwieweit ein inertes Verhalten der anorganischen Pigmente beim Glasurbrand vorliegt.

Als Grundmaterial für die erfindungsgemässen ummantelten Hartstoffpartikel auf Oxidbasis werden vorzugsweise Aluminiumoxid, Zirkonoxid, Siliciumoxid, Spinelle oder Mischungen davon, gegebenenfalls mit den üblichen Verunreinigungen und/oder Zusätzen, wie beispielsweise Stabilisatoren oder Sinterhilfsmittel, eingesetzt.
Ein besonders bevorzugtes Grundmaterial ist Korund, insbesondere Schmelz- oder Sinterkorund.
Die Partikelgrösse der erfindungsgemässen ummantelten Hartstoffpartikel beträgt 0,03 bis 3 mm, vorzugsweise 0,06 bis 0,5 mm. Besonders bevorzugt werden enge Kornbänder, wie sie im FEPA-Standard 42-D-1984 bzw. 43-D-1984 beschrieben werden.

Aufgrund ihrer Grösse sind die ummantelten Hartstoffpartikel sehr gut zu verarbeiten, da sie rieselfähig und staubfrei sind und nicht agglomerieren.
Sie sind daher sowohl im Trockenglasierverfahren als auch in den gebräuchlichen Nassglasierverfahren einsetzbar und lassen sich gut durch automatische Vorrichtungen fördern und dosieren.

Der keramische Farbkörper wird in einer Menge von 2 bis 20 Gew.%, vorzugsweise 5 bis 10 Gew.%, bezogen auf die Menge der Partikel vor der Ummantelung, eingesetzt. Die aufzubringende Menge hängt dabei von der Korngrösse des Farbkörpers, der gewünschten Farbstärke, Farbtiefe sowie der Korngrösse der Hartstoffpartikel ab.

Bei Verwendung feiner Körnungen (z. B. F 220 nach FEPA) können keramische Glasuren so eingefärbt werden, dass sich ein homogener visueller Farbeindruck ergibt, wie er mit einer herkömmlichen Glasurfärbung durch direkten Farbkörperzusatz erreicht wird.
Es hat sich jedoch gezeigt, dass bei Verwendung der erfindungsgemässen ummantelten Hartstoffpartikel eine wesentlich geringere Menge an Farbkörper ausreicht, um dieselbe Farbsättigung wie bei der herkömmlichen Glasurfärbung zu erreichen.
So wurde beispielsweise durch einen Zusatz von 7 Gew.% farbig ummantelter Korundpartikel mit einem Farbkörpergehalt von maximal 10 Gew.%, also maximal 0,7 Gew.% Farbkörper, bezogen auf die gesamte trockene Glasurmischung, die gleiche Farbsättigung erreicht wie bei einem direkten Zusatz von 5 Gew.% Farbkörper zur gleichen Glasur.

Hierdurch ist es möglich, den Schwermetallanteil der Glasuren drastisch zu senken, ohne auf andere Farbkörperzusammensetzungen ausweichen zu müssen.

Als Bindemittel für die Ummantelung eignet sich grundsätzlich jedes Bindemittel, das sowohl den Hartstoff als auch den Farbkörper ausreichend benetzt, eine genügend fest haftende Schicht bildet und bei der vorgesehenen Verwendung der ummantelten Partikel, beispielsweise beim Glasurbrand von Fliesen, keine störenden Auswirkungen hat.

Bevorzugte Bindemittel sind Kieselsäure, Kieselsäuresalze, jeweils mit oder ohne Zusatz von farblosen Glasfritten, Aluminiummonophosphat oder Gemische dieser Substanzen. Besonders bevorzugt sind Alkalisilikate ("Wassergläser"),wie Natronwasserglas.

Die erfindungsgemässen ummantelten Hartstoffpartikel können auf einfache und kostengünstige Weise hergestellt werden. Zu diesem Zweck werden beispielsweise die zu ummantelnden Hartstoffpartikel zunächst mit einer Lösung oder Suspension des Bindemittels benetzt. Dies kann beispielsweise durch einfaches Mischen in einem üblichen Mischer oder durch Aufsprühen auf die in Bewegung befindlichen Partikel durchgeführt werden. Als Lösung oder Suspension wird vorzugsweise eine Lösung bzw. eine Suspension mit Wasser oder einer anderen leicht verdampfbaren Flüssigkeit verwendet. Vorteilhaft wird nicht wesentlich mehr Bindemittellösung bzw. -suspension eingesetzt als zur gleichmässigen Benetzung der Partikel und der Bindung der vorgesehenen Farbkörpermenge erforderlich ist. Die erforderliche Menge hängt von der spezifischen Oberfläche bzw. der Grösse der Partikel und der Viskosität der Lösung bzw. Suspension und der Farbkörper ab.

Die so benetzten Partikel werden anschliessend gründlich mit der erforderlichen Menge des feingepulverten Farbkörpers vermischt, so dass sich ein gleichmässiger Überzug bildet. Vorzugsweise werden die Mengenverhältnisse zwischen Bindemittel und Farbkörper so gewählt, dass dieser Überzug aussen im wesentlichen kein überschüssiges Bindemittel aufweist, weil sonst die Partikel leicht zusammenkleben und Agglomerate bilden. Nach dem Aufbringen des Farbkörpers werden die Partikel zunächst getrocknet. Die weitere thermische Behandlung hängt sehr stark von der gewünschten Anwendung ab und umfasst einen Temperaturbereich von
- mindestens 300°C für die Anwendung in Kunststoffoberflächen, Beton sowie speziell bei Verwendung von mit Farbgläsern beschichteten Korunden in Fliesen zur Erzeugung eines Melierungseffektes
   bis
- maximal 1200°C für die Anwendung in Fliesen, falls ein absolut inertes Verhalten der beschichteten Korunde erforderlich ist.
Zuletzt wird gegebenenfalls desagglomeriert und/oder gesiebt,um entstandene Agglomerate zu zerstören und/oder zu entfernen.

Eine bevorzugte Verwendung der erfindungsgemässen ummantelten Hartstoffpartikel ist ihr Zusatz zu keramischen Glasuren oder Emails. In erster Linie dienen die Partikel dort zur Erhöhung der Verschleissfestigkeit und zur Aufrauhung der Oberfläche und damit der Verminderung der Rutschgefahr. Zu diesem Zweck werden die Partikel vorzugsweise in der Oberfläche der Glasur bzw. der Emailschicht eingelagert. Dies kann durch Aufstreuen auf die bereits als Schlicker oder in Pulverform aufgebrachte Glasur- bzw. Emailmasse vor dem Brennen oder während des Brennvorgangs geschehen. Daneben kann der Zusatz der Partikel auch dazu verwendet werden, das Aussehen der fertigen Glasur- bzw. Emailschicht zu beeinflussen, beispielweise zur Erreichung einer veränderten Oberflächenstruktur in der Art eines Matteffekts, oder zur Erzeugung von Sprenkelungen und ähnlichen Farbeffekten, wenn für die Glasur- bzw. Emailgrundmasse und die Partikelummantelung unterschiedliche Farbtöne und/oder Farbintensitäten gewählt werden.
In diesem Fall kann es je nach dem Transparenzgrad der Glasur bzw. des Emails auch von Vorteil sein, die Partikel gleichmässig in der Glasurmasse zu verteilen oder ähnlich wie die sogenannten Unterglasurfarben zuerst auf das Substrat aufzubringen und mit der Glasur zu überdecken.

Besonders bevorzugt ist die Verwendung der erfindungsgemässen ummantelten Hartstoffpartikel in der Glasur von keramischen Bodenfliesen im Aussenbereich, in Nassräumen und für stark verschleissbelastete Fussböden, insbesondere in öffentlichen Bauwerken und in der Industrie.

Eine weitere bevorzugte Verwendung der erfindungsgemässen ummantelten Hartstoffpartikel ist ihr Zusatz zu Kunststoffen und Beschichtungsmassen, beispielsweise für Boden- und Wandbeläge. Auch hierbei kommen ihre Vorteile, nämlich die Verbindung von Verschleissschutz und Farbgebung, zum Tragen.

Ebenfalls eine bevorzugte Verwendung der erfindungsgemässen ummantelten Hartstoffpartikel ist ihr Zusatz zu Anstrichstoffen für mechanisch belastete Anstriche.

Ausserdem können die erfindungsgemässen ummantelten Hartstoffpartikel beispielsweise als Zusatz zu Kunststeinmassen, Betons oder Verputzen verwendet werden.

Die nachfolgenden Beispiele sollen den Gegenstand der vorliegenden Erfindung näher erläutern.

### Beispiel 1

Zu 1 kg Korund (Edelkorund, Körnung F-120 (d₅₀ ≃ 110 µm)) wurden 25 ml einer Mischung aus 60 Vol.% Natronwasserglaslösung (34,2 Gew.% Feststoffgehalt, 8 Gew.% Na₂O, 26,2 Gew.% SiO₂, Viskosität ca. 70 mPa·s) und 40 Vol.% Wasser gegeben und ca. 20 min in einem Schaufelmischer gemischt. Zu dem auf diese Weise gleichmässig benetzten Korund wurden 100 g Farbkörper, z.B. vom Spinelltyp, (Korngrösse 100% < 63 µm)) gegeben und der Mischvorgang weitere 20 min fortgesetzt. Die so erhaltenen überzogenen Korundpartikel wurden bei 150°C bis zu einer Restfeuchte von max. 0,1% (im Trommeltrockner während 4 h mit Umluft) getrocknet. Nach der Trocknung fand eine Kontrollsiebung bei 212 µm statt. Anschliessend wurden die getrockneten Partikel mit Ausnahme des Überkornes bei 1000°C in oxidierender Atmosphäre (Luft) im Drehrohrofen gebrannt. Die mittlere Verweilzeit dabei lag bei 2 h.
Nach dem Abkühlen wurden die Partikel auf einem Schwingsieb unter Verwendung von Hartgummikugeln desagglomeriert und gleichzeitig bei 212 µm gesiebt, um verbleibende Agglomerate abzutrennen. Das Produkt ist eine fliessfähige Körnung, die optisch einen homogenen Farbeindruck vermittelt.

### Beispiel 2

Analog zu Beispiel 1 wurden Korundkörnungen mit jeweils 10 Gew.% eines keramischen Farbkörpers ummantelt. Verwendet wurden Farbkörper der folgenden Farben und Zusammensetzungen (in Gew.%):
- Grün:: Cr₂O₃ 95%
Al₂O₃ 3%
SiO₂ 2%
- Braun:: ZnO 50%
Fe₂O₃ 25%
Cr₂O₃ 25%
- Blau:: Co₃O₄ 20%
Al₂O₃ 80%
- Gelb:: Pb₃O₄ 40%
Sb₂O₃ 40%
ZnO 10%
CaO 10%
Die folgende Tabelle zeigt die gegenüber der herkömmlichen Glasurfärbung mögliche Verringerung des Gehalt an umweltrelevanten Verbindungen in der Glasur (in Gew.%) durch Einsatz der erfindungsgemässen Hartstoffpartikel.

| Farbe | Umweltrelevante Verbindung | Bei direkter Einfärbung mit 5 Gew.% Farbkörper (Gew.%) *) | Bei Einfärbung mit 7 Gew.% der erfindungsgemässen Partikel (Gew.%) |
|---|---|---|---|
| Grün | Cr₂O₃ | 4,75 | 0,67 |
| Braun | ZnO | 2,50 | 0,35 |
| | Cr₂O₃ | 1,25 | 0,18 |
| Blau | Co₃O₄ | 1,00 | 0,14 |
| Gelb | Pb₃O₄ | 2,00 | 0,28 |
| | Sb₂O₃ | 2,00 | 0,28 |
| | ZnO | 0,50 | 0,07 |

| | | | |
|---|---|---|---|
| *) Die Differenz zu den angegebenen 5% sind Bestandteile des Farbkörpers, die selbst nicht umweltrelevant sind (z. B. Al₂O₃, SiO₂, Fe₂O₃....) | | | |

## Patentansprüche

1. Hartstoffpartikel auf Oxidbasis, gekennzeichnet durch eine Ummantelung, die wenigstens einen keramischen Farbkörper und wenigstens ein Bindemittel enthält.

2. Ummantelte Hartstoffpartikel nach Patentanspruch 1, dadurch gekennzeichnet, dass das Grundmaterial ausgewählt ist aus der Gruppe Aluminiumoxid, Zirkonoxid, Siliciumoxid, Spinelle und Mischungen dieser Oxide.

3. Ummantelte Hartstoffpartikel nach Patentanspruch 2, dadurch gekennzeichnet, dass das Grundmaterial Korund ist.

4. Ummantelte Hartstoffpartikel nach einem der Patentansprü-che 1 bis 3, dadurch gekennzeichnet, dass die Partikelgrösse 0,03 bis 3 mm beträgt.

5. Ummantelte Hartstoffpartikel nach einem oder mehreren der Patentansprüche 1 bis 4, dadurch gekennzeichnet, dass die Menge an keramischen Farbkörpern in der Ummantelung 5 bis 10 Gew.%, bezogen auf die ummantelten Partikel, beträgt.

6. Ummantelte Hartstoffpartikel nach einem oder mehreren der Patentansprüche 1 bis 5, dadurch gekennzeichnet, dass das Bindemittel aus Kieselsäure, einem Kieselsäuresalz, einer farblosen Glasurfritte, Aluminiumphosphat oder einem Gemisch dieser Stoffe besteht.

7. Ummantelte Hartstoffpartikel nach Patentanspruch 6, dadurch gekennzeichnet, dass das Bindemittel ein Alkalisilikat ist.

8. Verfahren zur Herstellung von ummantelten Hartstoffpartikeln nach einem oder mehreren der Patentansprüche 1 bis 7, dadurch gekennzeichnet, dass die zu ummantelnden Hartstoffpartikel mit einer Lösung oder Suspension eines Bindemittels benetzt, anschliessend mit der erforderlichen Menge des feingepulverten Farbkörpers gemischt und getrocknet werden.

9. Verfahren nach Patentanspruch 8, dadurch gekennzeichnet, dass als Bindemittellösung eine wässrige Alkalisilikatlösung verwendet wird.

10. Verfahren nach Patentanspruch 8 oder 9, dadurch gekennzeichnet, dass die Ummantelung der Hartstoffpartikel nach dem Trocknen bei einer Temperatur von 300 bis 1200°C gehärtet bzw. eingebrannt wird.

11. Verwendung der ummantelten Hartstoffpartikel nach einem oder mehreren der Patentansprüche 1 bis 7 als Zusatz zu keramischen Glasuren oder Emails.

12. Verwendung nach Patentanspruch 11 als verschleisshemmender Zusatz und/oder Gleitschutz in der Glasuroberfläche von keramischen Fliesen, insbesondere Bodenfliesen.

13. Verwendung der ummantelten Hartstoffpartikel nach einem oder mehreren der Patentansprüche 1 bis 7 als Zusatz zu Kunststoffen oder Beschichtungsmassen.

14. Verwendung der ummantelten Hartstoffpartikel nach einem oder mehreren der Patentansprüche 1 bis 7 als Zusatz zu Anstrichstoffen.

15. Verwendung der ummantelten Hartstoffpartikel nach einem oder mehreren der Patentansprüche 1 bis 7 als Zusatz zu Beton, Kunststeinen oder Verputzen.
